# EUROPEAN PATENT SPECIFICATION

(11) **EP 3 534 040 B1**
(45) Date of publication and mention of the grant of the patent: **02.06.2021**
(21) Application number: 19159304.5
(22) Date of filing: 26.02.2019
(51) Int. Cl.: F16H 57/02, F16H 57/027, F16N 7/26, F01M 13/04

(54) **STRADDLED VEHICLE**
GRÄTSCHSITZFAHRZEUG
VÉHICULE À ENFOURCHER

(30) Priority: 01.03.2018 JP 2018036371
(43) Date of publication of application: 04.09.2019
(73) Proprietor: YAMAHA HATSUDOKI KABUSHIKI KAISHA, Iwata-shi, Shizuoka 438-8501 (JP)
(72) Inventor: DATE, Takashi, Iwata-shi, Shizuoka 438-8501 (JP)
(74) Representative: Grünecker Patent- und Rechtsanwälte PartG mbB

(56) References cited:
- EP-A1- 2 650 568
- EP-A2- 2 546 551

## Description

The present invention relates to a straddled vehicle according to the independent claim 1. A straddled vehicle according to the preamble of independent claim 1 can be taken from the prior art document EP 2 546 551 A2.

A straddled vehicle includes a drive source such as an engine, and a power transmission device for transmitting the power from the drive source to the driven wheel. As a part of a power transmission device, a gear box is known in the art that includes a case in which lubricating oil (hereinafter referred to simply as "oil") is reservoired, and a plurality of gears arranged in the case. Such a gear box is described in JP 2013-217473 A (EP 2 650568 A1), for example.

FIG. 12 is a vertical cross-sectional view of the gear box described in JP 2013-217473 A. The gear box includes a gear chamber 310 that accommodates a plurality of gears 301, 302, 303 and 304. The gear 301 is provided on a secondary shaft 311 of a belt-type continuously variable transmission (not shown). The gear 304 is provided on a drive shaft 313 that is linked to the driven wheel. The gear 302 and the gear 303 are provided on a main shaft 312. The gear 302 meshes with the gear 301, and the gear 303 meshes with the gear 304. In addition to the gear chamber 310, the gear box includes a breather chamber 320 that communicates with the outside of a case 300. As the pressure of the gas inside the gear chamber 310 increases, the gas flows, together with scattered oil, into the breather chamber 320 through a breather chamber inlet 321. Since the specific gravity of the gas is different from the specific gravity of the oil, the gas and the oil separate from each other inside the breather chamber 320. The gas flows out of the case 300 through the breather chamber outlet (not shown). The oil, by its own weight, flows down into the gear chamber 310 through the breather chamber inlet 321.

Since the breather chamber 320 serves to separate between the gas and the oil from each other, the volume of the breather chamber 320 is preferably large. Since the breather chamber inlet 321 serves to bring the oil back into the gear chamber 310 by using the own weight of the oil, the breather chamber inlet 321 is preferably formed at a lowest portion of the breather chamber 320. This is because oil that is located below the breather chamber inlet 321 cannot return to the gear chamber 310 by its own weight.

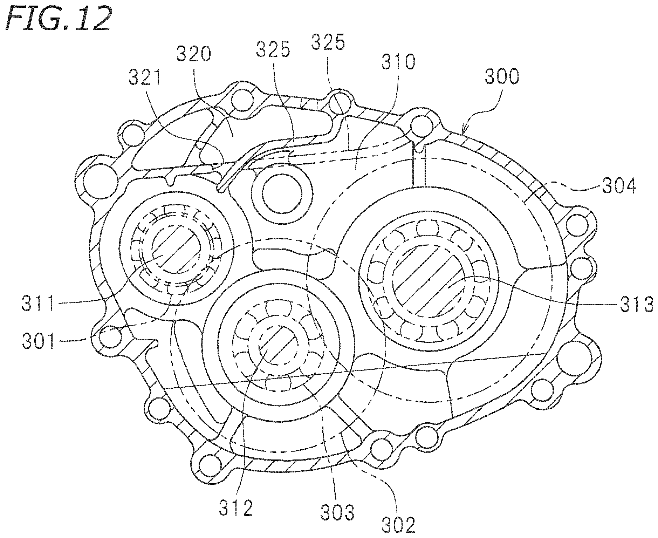

In view of this, one may consider extending a partition wall 325 of the breather chamber 320 rightward in FIG. 12 without changing the location of the breather chamber inlet 321, as indicated by a phantom line in FIG. 12. However, as can be seen from FIG. 12, with such a design change, there is a limitation on the expansion of the volume of the breather chamber 320. Therefore, with conventional techniques, there has been a certain limitation on realizing both the expansion of the volume of the breather chamber 320 and the ease for oil to return into the gear chamber 310 from the breather chamber 320.

It is an object of the present invention to provide a straddled vehicle that realizes both a sufficient large volume of the breather chamber and the ease for oil to return into the gear chamber from the breather chamber. According to the present invention said object is solved by a straddled vehicle having the features of independent claim 1. Preferred embodiments are laid down in the dependent claims.

A straddled vehicle disclosed herein includes: a case; a partition wall that is arranged inside the case and partitions the inside of the case into a gear chamber and a breather chamber above the gear chamber; a first, second and third rotation shaft that are rotatably supported on the case and extend in a vehicle width direction; a first gear that is provided on the first rotation shaft and arranged in the gear chamber; a second gear that is provided on the second rotation shaft, arranged in the gear chamber and meshes with the first gear; a third gear that is provided on the second rotation shaft and arranged in the gear chamber; and a fourth gear that is provided on the third rotation shaft, arranged in the gear chamber and meshes with the third gear. A center of the second rotation shaft is arranged rearward of a center of the first rotation shaft. A center of the third rotation shaft is arranged rearward of the center of the second rotation shaft. A lower end of the fourth gear is located below a lower end of the second gear. A front end of the breather chamber is located forward of a rear end of the first rotation shaft, and a rear end of the breather chamber is located rearward of a front end of the third rotation shaft. A hole that allows communication between the gear chamber and the breather chamber is formed at a position of the partition wall that is rearward of a front end of the fourth gear and forward of a rear end of the fourth gear. The hole is arranged rightward of a right end of the fourth gear or leftward of a left end of the fourth gear. The hole does not overlap with the fourth gear, as the vehicle is seen from above.

With the present straddled vehicle, the lower end of the fourth gear is located below the lower end of the second gear. Since the position of the fourth gear is relatively low, the partition wall can be extended rearward to a position above the fourth gear without interfering with the fourth gear. With the present straddled vehicle, the partition wall is extended to a position above the fourth gear, a portion of the breather chamber is extended to a position rearward of the front end of the third rotation shaft. Since the size of the breather chamber in the front-rear direction is large, it is possible to expand the volume of the breather chamber. Since the position of the fourth gear is relatively low, the position of the extended portion of the partition wall (i.e., a portion that is above the fourth gear) can be lowered. By lowering the position of the extended portion of the partition wall, it is possible to increase the size in the up-down direction of the breather chamber. Therefore, it is possible to further expand the volume of the breather chamber. Now, since the lower end of the fourth gear is located below the lower end of the second gear, the amount of lubricating oil that is scooped up by the fourth gear is relatively large. When the hole that connects together the gear chamber and the breather chamber (the breather chamber inlet) is provided near the fourth gear, the amount of lubricating oil coming into the breather chamber from the gear chamber may possibly become large. However, with the present straddled vehicle, the position of the hole and the position of the fourth gear are staggered from each other in the left-right direction, and the hole does not overlap with the fourth gear, as the vehicle is seen from above. Therefore, it is possible to suppress the flow, into the breather chamber, of the lubricating oil that is scooped up by the fourth gear. With the present straddled vehicle, the hole is provided at a position that is rearward of the front end of the fourth gear and forward of the rear end of the fourth gear. Thus, by arranging the hole at a position that is more rearward than with conventional techniques, it is possible to provide a hole in an extended portion of the partition wall that is arranged at a relatively low position. Therefore, it is possible to provide the hole at a lower position of the partition wall, and it is therefore possible to bring oil back into the gear chamber from the breather chamber. Thus, with the present straddled vehicle, it is possible to realize both a sufficient volume of the breather chamber and the ease for oil to return into the gear chamber from the breather chamber.

In one preferred aspect, the case includes a first case component, and a second case component that is arranged closer to a center in the vehicle width direction relative to the first case component. The straddled vehicle includes a gasket that is sandwiched between the first case component and the second case component. One of the fourth gear and the hole is arranged leftward of the gasket, and the other one of the fourth gear and the hole is arranged rightward of the gasket. The gasket includes an extension that extends downward from the hole of the partition wall, as the vehicle is seen from sideways.

In this aspect, with the extension of the gasket, it is possible to suppress the flow, into the breather chamber through the hole, of oil that is scooped up by the fourth gear.

In one preferred aspect, the first case component includes a first mating surface; the second case component includes a second mating surface that faces the first mating surface with the gasket sandwiched therebetween. A recessed portion is formed in the first mating surface or the second mating surface. The hole is defined by the recessed portion of the first mating surface or the second mating surface and the gasket.

In this aspect, it is possible to easily form a hole that connects together the gear chamber and the breather chamber. Particularly when the first case component and the second case component are manufactured by casting, it is easy to form a hole that connects together the gear chamber and the breather chamber.

In one preferred aspect, the straddled vehicle includes a rib extending downward from a portion of the partition wall that is forward or rearward of the hole. A portion of the extension of the gasket is in contact with the rib.

In this aspect, the space below the hole is defined by both the gasket and the rib. Therefore, it is possible to further suppress the flow of the oil into the breather chamber.

In one preferred aspect, the hole is located rearward of a front end of the second gear and forward of a rear end of the second gear. The rib extends rearward and downward from a portion of the partition wall that is forward of the hole.

In this aspect, with the rib, it is possible to suppress the flow, into the breather chamber through the hole, of the oil that is scooped up by the second gear.

In one preferred aspect, the partition wall includes a first partition wall provided on the first case component and a second partition wall provided on the second case component. The hole is formed in the second partition wall.

In one preferred aspect, an outer diameter of the fourth gear is greater than any of outer diameters of the first gear, the second gear and the third gear.

In this aspect, it is possible to efficiently decelerate.

In one preferred aspect, the third rotation shaft includes a first portion that is arranged inside the gear chamber, and a second portion that extends from the case toward a center in the vehicle width direction and is arranged outside the gear chamber. The straddled vehicle includes a driven wheel that is linked to the second portion of the third rotation shaft.

In one preferred aspect, the case includes a first case component and a second case component that is arranged closer to a center in the vehicle width direction relative to the first case component. The straddled vehicle includes a gasket that is sandwiched between the first case component and the second case component. The first gear and the second gear are arranged on one of a right side and a left side of the gasket, and the third gear and the fourth gear are arranged on the other one of the right side and the left side of the gasket.

In this aspect, as compared with a case where the first to fourth gears are all arranged closer to the center of the gasket in the vehicle width direction, it is possible to reduce the number of gears to be arranged closer to the center of the gasket in the vehicle width direction. Thus, it is possible to reduce the size of the second case component in the vehicle width direction. Therefore, it is possible to make the second case component smaller.

In one preferred aspect, as the vehicle is seen from sideways, a portion of the partition wall that is forward of the hole extends upward while extending forward, a portion of the partition wall that is rearward of the hole extends upward while extending rearward, and a portion of the partition wall that extends from forward of the hole to rearward of the hole is formed in a downwardly-depressed curved shape.

In this aspect, since a portion of the partition wall that extends from forward of the hole to rearward of the hole is formed in a downwardly-depressed curved shape, the position of the hole can be kept low even if the attitude of the case is inclined so as to somewhat raise or lower the front side thereof. Thus, it is possible to change the attitude of the case while ensuring the ease for oil to return into the gear chamber from the breather chamber. Therefore, it is possible to use cases of the same specifications for a plurality of straddled vehicles of different specifications. Thus, it is possible to realize a cost reduction by using common components.

In one preferred aspect, the partition wall is formed in a shape such that a position of the hole is a lowest position of the partition wall, as the vehicle is seen from sideways, whether an angle is a first angle or a second angle, wherein the angle is an angle formed between a straight line that extends between a center of the third rotation shaft and a center of the second rotation shaft and a horizontal line that passes through the center of the third rotation shaft.

In this aspect, the position of the hole is the lowest position of the partition wall whether the angle formed between the straight line and the horizontal line is the first angle or the second angle. Therefore, the case described above can be used both with straddled vehicles of such specifications that the angle is the first angle and with straddled vehicles of such specifications that the angle is the second angle. Thus, it is possible to realize a cost reduction by using common components.

In one preferred aspect, a height of the center of the third rotation shaft is equal to a height of the center of the second rotation shaft or the center of the third rotation shaft is lower than the center of the second rotation shaft.

In this aspect, the fourth gear provided on the third rotation shaft can be arranged at a relatively low position since the height of the center of the third rotation shaft is low. Therefore, it is possible to easily realize a sufficient volume of the breather chamber above the fourth gear. Moreover, since the hole can be arranged above the fourth gear, as the vehicle is seen from sideways, it is made easier for the oil to return into the gear chamber from the breather chamber. Therefore, it is possible to easily realize both a sufficient volume of the breather chamber and the ease for oil to return into the gear chamber from the breather chamber.

In one preferred aspect, the case is formed with another hole that is located forward of the hole and that connects between inside and outside of the breather chamber. The straddled vehicle includes an air cleaner case at least a portion of which is arranged above the case, as the vehicle is seen from sideways. The straddled vehicle includes a gas passageway that includes an inlet end connected to the other hole of the case and an outlet end connected to the air cleaner case. As the vehicle is seen from sideways, a portion of the inlet end is located rearward of a front end of the outlet end and forward of a rear end of the outlet end.

In this aspect, the gas passageway that connects together the breather chamber and the air cleaner case can be arranged so as to extend straight in the up-down direction, as the vehicle is seen from sideways. Therefore, it is possible to shorten the gas passageway. It is possible to make the gas passageway compact and to make the vehicle smaller.

According to the present teaching, it is possible to provide a straddled vehicle that realizes both a volume of the breather chamber that is greater than those with conventional techniques and the ease for oil to return into the gear chamber from the breather chamber.

### BRIEF DESCRIPTION OF THE DRAWINGS

FIG. 1 is a left side view of a motorcycle of an embodiment.
FIG. 2 is a cross-sectional view of a power unit of the motorcycle.
FIG. 3 is a right side view of a second unit case component of the power unit.
FIG. 4 is a cross-sectional view of a gear box.
FIG. 5 is a right side view of a first case component.
FIG. 6 is a left side view of a second case component.
FIG. 7 is a left side view of a gasket.
FIG. 8 is a perspective view of the first case component.
FIG. 9 is a perspective view of the second case component.
FIG. 10 is a right side view of a part of the power unit and an air cleaner.
FIG. 11 is a right side view of a second unit case component of a power unit of another embodiment.
FIG. 12 is a vertical cross-sectional view of a conventional gear box.

### DETAILED DESCRIPTION OF THE PREFERRED EMBODIMENTS

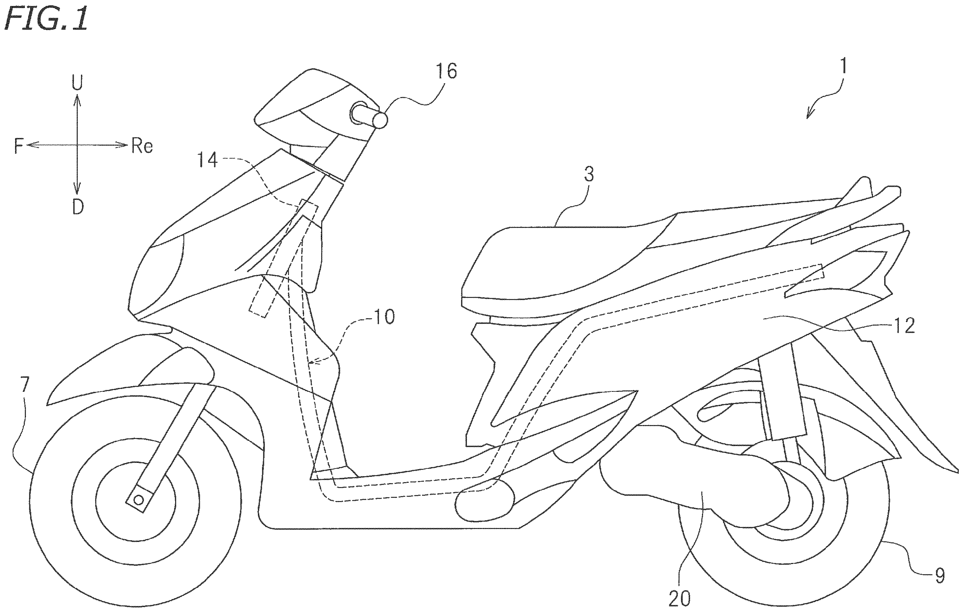

Referring to the drawings, a straddled vehicle of an embodiment of the present teaching will now be described. In the following description, a motorcycle 1 as shown in FIG. 1 will be described as an example of a straddled vehicle.

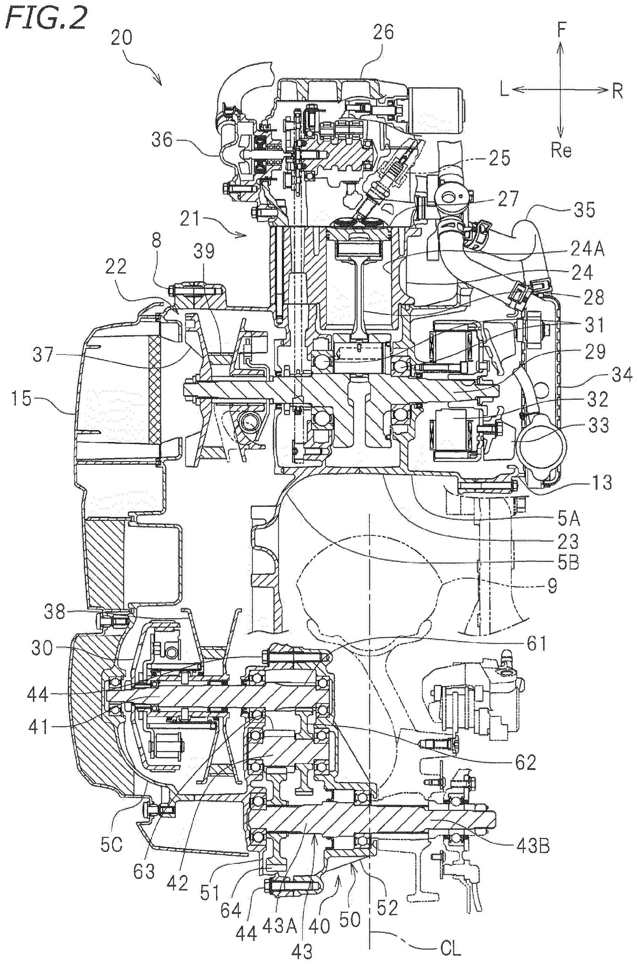

The terms front, rear, left, right, up and down, as used in the description below, refer to these directions as seen from a virtual rider seated on a seat 3 while the motorcycle 1 is standing upright on a horizontal surface with no rider and no load thereon, unless specified otherwise. The designations F, Re, L, R, U and D, as used in the figures, refer to front, rear, left, right, up and down, respectively. The term "front/forward" refers not only to the direction that extends in the front direction along the vehicle center line CL (see FIG. 2), as the vehicle is seen from above, but also to directions that are inclined left/right from that direction by an angle that is less than or equal to 45 degrees. Similarly, the term "rear/rearward" refers not only to the direction that extends rearward along the vehicle center line CL, as the vehicle is seen from above, but also to directions that are inclined left/right from that direction by an angle of 45 degrees of less. The term "left/leftward" refers not only to the direction that extends leftward vertical to the vehicle center line CL, as the vehicle is seen from above, but also to directions that are inclined frontward/rearward from that direction by an angle of 45 degrees of less. The term "right/rightward" refers not only to the direction that extends rightward vertical to the vehicle center line CL, as the vehicle is seen from above, but also to directions that are inclined frontward/rearward from that direction by an angle of 45 degrees of less. The term "up/upward" refers not only to the vertically upward direction, as the vehicle is seen from sideways, but also to directions that are inclined frontward/rearward from that direction by an angle of 45 degrees of less. The term "down/downward" refers not only to the vertically downward direction, as the vehicle is seen from sideways, but also to directions that are inclined frontward/rearward from that direction by an angle of 45 degrees of less.

The motorcycle 1 of the present embodiment is a scooter. The motorcycle 1 includes a body frame 10, a front wheel 7, a rear wheel 9, and a power unit 20 for driving the rear wheel 9. The motorcycle 1 also includes the seat 3 in which the passenger is seated, and a body cover 12 attached to the body frame 10. The seat 3 is supported on the body frame 10. A head pipe 14 is secured on a front portion of the body frame 10. A steering shaft (not shown) is rotatably supported on the head pipe 14. A handle 16 is attached to an upper portion of the steering shaft. The power unit 20 is a so-called "unit swing-type power unit". The power unit 20 is supported on the body frame 10 by a pivot shaft (not shown) so that the power unit 20 can pivot.

FIG. 2 is a cross-sectional view of the power unit 20. The power unit 20 includes an internal combustion engine (hereinafter referred to as an engine) 21, a belt-type continuously variable transmission (hereinafter referred to as a CVT) 22, and a gear box 40. The power unit 20 includes a first unit case component 5A, a second unit case component 5B and a third unit case component 5C. The first unit case component 5A is arranged rightward of the second unit case component 5B. The third unit case component 5C is arranged leftward of the second unit case component 5B. The first unit case component 5A and the second unit case component 5B are secured by a plurality of bolts (not shown). The second unit case component 5B and the third unit case component 5C are secured by a plurality of bolts 8. A fan cover 13 is arranged rightward of the first unit case component 5A. A transmission cover 15 is arranged leftward of the third unit case component 5C.

The engine 21 includes a crank case 23, a cylinder body 24 extending forward or upward from the crank case 23, a cylinder head 25 connected to the cylinder body 24, and a cylinder head cover 26 connected to the cylinder head 25. The crank case 23 rotatably supports a crank shaft 29 via a bearing 31. In the present embodiment, the crank case 23 is composed of a portion of the first unit case component 5A and a portion of the second unit case component 5B. A cylinder 24A is formed inside the cylinder body 24. A piston 27 is arranged inside the cylinder 24A. The piston 27 and the crank shaft 29 are linked together by a conrod 28.

An electric generator 32 and a fan 33 are provided at the right end portion of the crank shaft 29. In the present embodiment, the engine 21 is a water-cooled internal combustion engine. A radiator 34 is arranged rightward of the fan 33. The radiator 34 is connected to a pump 36 for pumping the coolant water via a pipe 35.

The CVT 22 is an example of a transmission for transmitting the power of the crank shaft 29 so that the transmission ratio is variable. The CVT 22 includes a driving pulley 37, a driven pulley 38, and a belt 39 wound around the driving pulley 37 and the driven pulley 38. The driving pulley 37 is secured to the left end portion of the crank shaft 29. The driven pulley 38 is arranged rearward of the driving pulley 37. A first rotation shaft 41 is linked to the driven pulley 38 via a centrifugal clutch 30.

The gear box 40 is a reduction mechanism for transmitting the power of the crank shaft 29 with a constant reduction ratio. The gear box 40 is provided between the CVT 22 and the rear wheel 9 along the power transmission path. Note that the rear wheel 9 is a driven wheel that is driven by the power of the engine 21. The gear box 40 is configured to transmit the power from the CVT 22 to the rear wheel 9 with a constant reduction ratio.

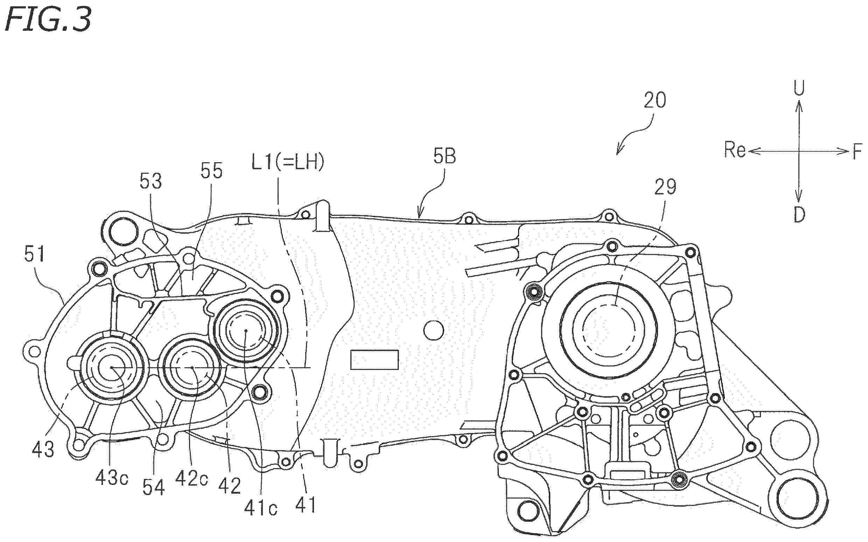

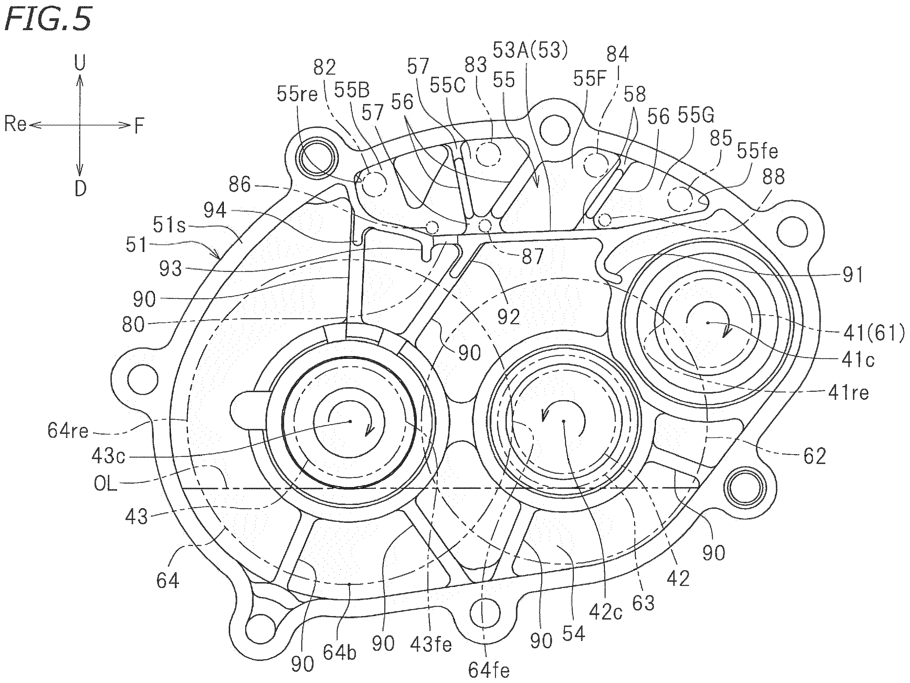

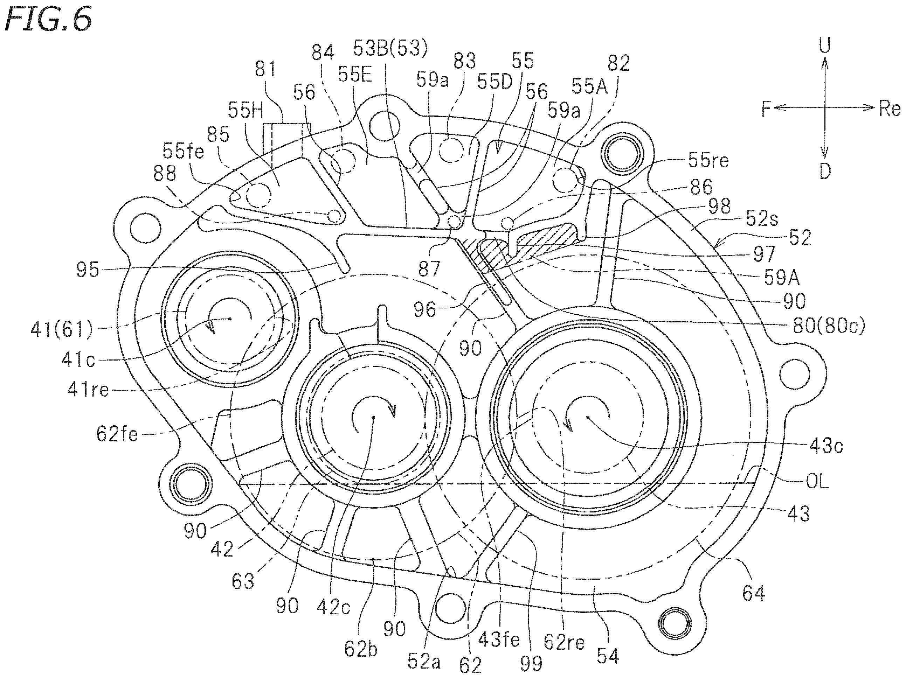

The gear box 40 includes a case 50. The case 50 includes a first case component 51, and a second case component 52 that is arranged closer to the center in the vehicle width direction relative to the first case component 51. Note that the vehicle width direction means the same as the left-right direction. Closer to the center in the vehicle width direction means closer to the vehicle center line CL, and outward in the vehicle width direction means away from the vehicle center line CL. Herein, the second case component 52 is arranged rightward of the first case component 51. FIG. 3 is a right side view of the second unit case component 5B. In the present embodiment, the first case component 51 is composed of a portion of the second unit case component 5B. The first case component 51 is composed of a rear portion of the second unit case component 5B. The first case component 51 includes a first mating surface 51s (see FIG. 5), and the second case component 52 includes a second mating surface 52s (see FIG. 6). The first case component 51 and the second case component 52 are assembled together so that the first mating surface 51s and the second mating surface 52s face each other. Herein, as shown in FIG. 2, the first case component 51 and the second case component 52 are assembled together by a plurality of bolts 44.

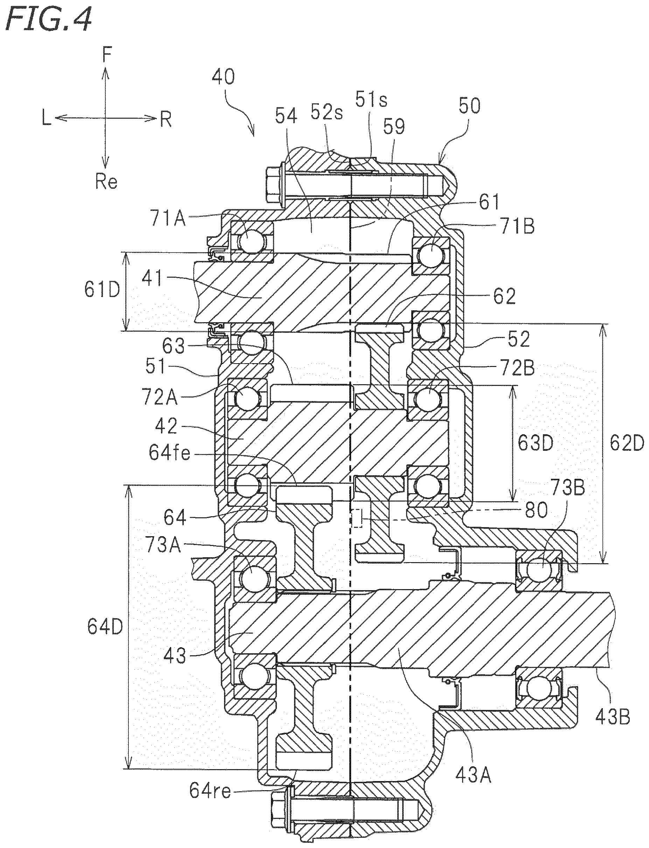

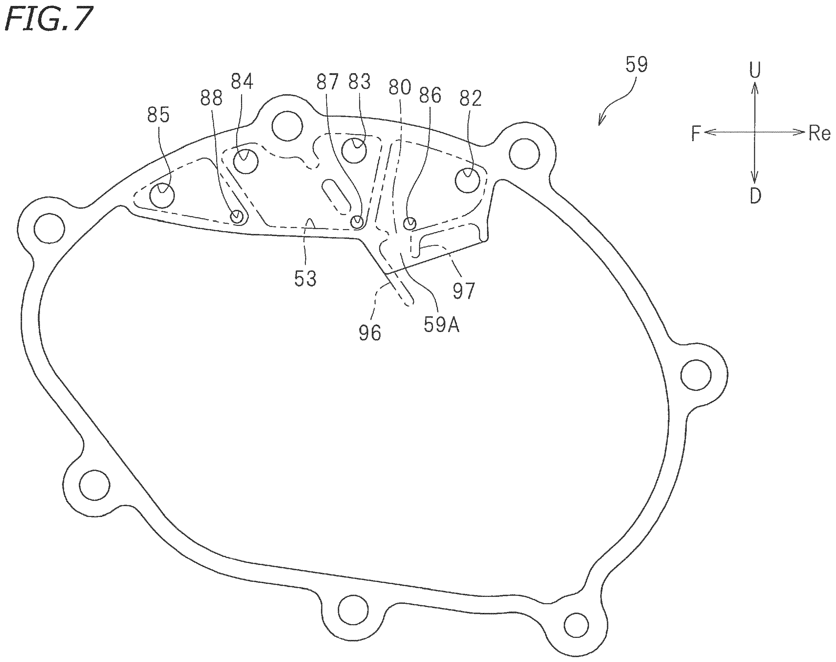

FIG. 4 is a cross-sectional view of the gear box 40. FIG. 5 is a right side view of the first case component 51. FIG. 6 is a left side view of the second case component 52. As shown in FIG. 4, a gasket 59 is sandwiched between the first case component 51 and the second case component 52. The gasket 59 is sandwiched between the first mating surface 51s of the first case component 51 and the second mating surface 52s of the second case component 52. FIG. 7 is a left side view of the gasket 59. Note that a portion of the second case component 52 is represented by a phantom line in FIG. 7.

As shown in FIG. 5, a first partition wall 53A is provided in the first case component 51. As shown in FIG. 6, a second partition wall 53B is provided in the second case component 52. The first partition wall 53A and the second partition wall 53B are arranged left and right with respect to each other with the gasket 59 sandwiched therebetween, and the partition wall 53A and the partition wall 53B together form a partition wall 53 that partitions the inside of the case 50. The partition wall 53 partitions the inside of the case 50 into a gear chamber 54, and a breather chamber 55 above the gear chamber 54. Note that oil is reservoired in the bottom portion of the gear chamber 54. The reference sign OL in FIG. 5 and FIG. 6 represents an example of the oil surface when the power unit 20 is not in operation.

As shown in FIG. 4, the gear box 40 includes the first rotation shaft 41, a second rotation shaft 42 and a third rotation shaft 43, which are rotatably supported on the case 50. The first to third rotation shafts 41 to 43 are parallel to each other, and extend in the vehicle width direction. The first rotation shaft 41 passes through the first case component 51. The first rotation shaft 41 extends leftward from the first case component 51. The intermediate portion of the first rotation shaft 41 is rotatably supported on the first case component 51 via a bearing 71A. The right end portion of the first rotation shaft 41 is rotatably supported on the second case component 52 via a bearing 71B. A portion of the first rotation shaft 41 is arranged inside the gear chamber 54. The left end portion of the second rotation shaft 42 is rotatably supported on the first case component 51 via a bearing 72A. The right end portion of the second rotation shaft 42 is rotatably supported on the second case component 52 via a bearing 72B. The second rotation shaft 42 is arranged inside the gear chamber 54. The third rotation shaft 43 passes through the second case component 52. The third rotation shaft 43 extends rightward from the second case component 52. In other words, the third rotation shaft 43 extends from the second case component 52 toward the center in the vehicle width direction. The left end portion of the third rotation shaft 43 is rotatably supported on the first case component 51 via a bearing 73A. The intermediate portion of the third rotation shaft 43 is rotatably supported on the second case component 52 via a bearing 73B. The third rotation shaft 43 includes a first portion 43A arranged inside the gear chamber 54, and a second portion 43B arranged outside the gear chamber 54. As shown in FIG. 2, the rear wheel 9 is linked to the second portion 43B of the third rotation shaft 43.

In the present embodiment, the bearings 71A, 71B, 72A, 72B, 73A and 73B are ball bearings. Note however that the bearings are not limited to ball bearings, but may be other types of rolling bearings such as needle bearings, or may be sliding bearings.

As shown in FIG. 6, the center 42c of the second rotation shaft 42 is located rearward of the center 41c of the first rotation shaft 41. The center 42c of the second rotation shaft 42 is located below the center 41c of the first rotation shaft 41. The center 43c of the third rotation shaft 43 is located rearward of the center 42c of the second rotation shaft 42. In the present embodiment, the height of the center 43c of the third rotation shaft 43 is equal to the height of the center 42c of the second rotation shaft 42. The first rotation shaft 41, the second rotation shaft 42 and the third rotation shaft 43 rotate in the directions respectively indicated by arrows in FIG. 5 and FIG. 6.

As shown in FIG. 4, a first gear 61 is provided on the first rotation shaft 41. A second gear 62 and a third gear 63 are provided on the second rotation shaft 42. A fourth gear 64 is provided on the third rotation shaft 43. The first to fourth gears 61 to 64 are arranged in the gear chamber 54. The first gear 61 may be formed integrally with the first rotation shaft 41, or may be attached to the first rotation shaft 41. Herein, the first gear 61 is formed integrally with the first rotation shaft 41. The second gear 62 and/or the third gear 63 may be formed integrally with the second rotation shaft 42, or may be attached to the second rotation shaft 42. Herein, the second gear 62 is attached to the second rotation shaft 42, and the third gear 63 is formed integrally with the second rotation shaft 42. The fourth gear 64 may be formed integrally with the third rotation shaft 43, or may be attached to the third rotation shaft 43. Herein, the fourth gear 64 is attached to the third rotation shaft 43.

The first gear 61 meshes with the second gear 62. The third gear 63 meshes with the fourth gear 64. The second gear 62 is arranged rearward of the first gear 61. The third gear 63 is arranged leftward of the second gear 62. The fourth gear 64 is arranged rearward of the third gear 63. The second gear 62 is arranged rightward of the gasket 59. The fourth gear 64 is arranged leftward of the gasket 59. The outer diameter 62D of the second gear 62 is greater than the outer diameter 61D of the first gear 61. The outer diameter 64D of the fourth gear 64 is greater than the outer diameter 63D of the third gear 63. In the present embodiment, 61D<63D<62D<64D. As can be seen from FIG. 5 and FIG. 6, a lower end 64b of the fourth gear 64 is located below a lower end 62b of the second gear 62. When the power unit 20 is not in operation, i.e., when the first to fourth gears 61 to 64 are not moving, a portion of the second gear 62 and a portion of the fourth gear 64 are immersed in the oil reservoired in the case 50 (see FIG. 6).

The gear chamber 54 is a chamber that accommodates the first to fourth gears 61 to 64 and supplies oil to the first to fourth gears 61 to 64 and the bearings 71A, 71B, 72A, 72B, 73A and 73B. At least one of the first to fourth gears 61 to 64 scoops up oil that is accumulated in the bottom portion of the gear chamber 54. Therefore, oil is scattered inside the gear chamber 54, and the scattered oil is supplied to the first to fourth gears 61 to 64 and the bearings 71A, 71B, 72A, 72B, 73A and 73B.

The breather chamber 55 is a chamber that serves to separate the gas and the oil from each other in the case 50 and guide the gas flow out of the case 50. As shown in FIG. 5, a front end 55fe of the breather chamber 55 is located forward of a rear end 41re of the first rotation shaft 41, and a rear end 55re of the breather chamber 55 is located rearward of a front end 43fe of the third rotation shaft 43.

Ribs 56 are provided above the first partition wall 53A of the first case component 51 and above the second partition wall 53B of the second case component 52. As described above, the gasket 59 is provided between the first case component 51 and the second case component 52. The breather chamber 55 is partitioned into a plurality of chambers by the ribs 56 and the gasket 59. Herein, the breather chamber 55 is partitioned into a first chamber 55A, a second chamber 55B, a third chamber 55C, a fourth chamber 55D, a fifth chamber 55E, a sixth chamber 55F, a seventh chamber 55G and an eighth chamber 55H.

As shown in FIG. 6, the partition wall 53 is formed with a hole 80 that allows communication between the gear chamber 54 and the breather chamber 55. In the present embodiment, the hole 80 is formed in the second partition wall 53B of the second case component 52. A recessed portion 80c that is recessed rightward is formed in the second mating surface 52s of the second partition wall 53B. The space around the hole 80 is defined by the recessed portion 80c and the gasket 59. The hole 80 is an inlet of the breather chamber 55 that guides the gas of the gear chamber 54 into the breather chamber 55. Hereinafter, the hole 80 will be referred to as the breather chamber inlet. The gas flowing into the breather chamber 55 is mixed with oil. Although the details will be described later, the breather chamber inlet 80 also serves to bring oil from the breather chamber 55 back into the gear chamber 54. The breather chamber inlet 80 allows communication between the gear chamber 54 and the first chamber 55A of the breather chamber 55. The case 50 is provided with another hole 81 that allows communication between the inside of the breather chamber 55 and the outside of the case 50. In the present embodiment, the other hole 81 is provided in the second case component 52. The other hole 81 serves to guide the gas flow out of the breather chamber 55. Hereinafter, the other hole 81 will be referred to as the breather chamber outlet. The breather chamber outlet 81 allows communication between the eighth chamber 55H of the breather chamber 55 and the outside of the case 50.

As shown in FIG. 7, the gasket 59 is formed with gas holes 82, 83, 84 and 85 and oil returning holes 86, 87 and 88. The gas holes 82 to 85 are provided above the oil returning holes 86 to 88. As shown in FIG. 5, the rib 56 between the second chamber 55B and the third chamber 55C is formed with a recessed portion 57. The rib 56 between the sixth chamber 55F and the seventh chamber 55G is formed with a recessed portion 58. As shown in FIG. 6, the rib 56 between the fourth chamber 55D and the fifth chamber 55E is formed with a recessed portion 59a. The first chamber 55A and the second chamber 55B communicate with each other via the gas hole 82. The second chamber 55B and the third chamber 55C communicate with each other via the recessed portion 57. The third chamber 55C and the fourth chamber 55D communicate with each other via the gas hole 83. The fourth chamber 55D and the fifth chamber 55E communicate with each other via the recessed portion 59a. The fifth chamber 55E and the sixth chamber 55F communicate with each other via the gas hole 84. The sixth chamber 55F and the seventh chamber 55G communicate with each other via the recessed portion 58. The seventh chamber 55G and the eighth chamber 55H communicate with each other via the gas hole 85. The breather chamber 55 is configured so that the gas, which has flown in through the breather chamber inlet 80, flows out of the breather chamber outlet 81 through the first chamber 55A, the gas hole 82, the second chamber 55B, the recessed portion 57, the third chamber 55C, the gas hole 83, the fourth chamber 55D, the recessed portion 59a, the fifth chamber 55E, the gas hole 84, the sixth chamber 55F, the recessed portion 58, the seventh chamber 55G, the gas hole 85 and the eighth chamber 55H in this order.

The lower portion of the first chamber 55A and the lower portion of the second chamber 55B communicate with each other via the oil returning hole 86. The lower portion of the third chamber 55C and the lower portion of the fourth chamber 55D communicate with each other via the oil returning hole 87. The lower portion of the fifth chamber 55E and the lower portion of the sixth chamber 55F communicate with each other via the oil returning hole 87. The seventh chamber 55G and the eighth chamber 55H communicate with each other via the oil returning hole 88. The breather chamber 55 is configured so that oil that accumulates in the bottom portions of the second to eighth chambers 55B to 55H is collected into the first chamber 55A through one or two or more of the oil returning holes 86 to 88 and the recessed portions 57 to 59 of the ribs 56 so as to return into the gear chamber 54 through the breather chamber inlet 80.

As described above, the breather chamber inlet 80 serves to guide the oil-containing gas from the gear chamber 54 into the breather chamber 55 and to bring the oil that has been separated from the gas in the breather chamber 55 back into the gear chamber 54. The oil, by its own weight, flows down into the gear chamber 54 from the breather chamber 55. In order to reduce the amount of oil that remains in the bottom portion of the breather chamber 55, it is preferred that the breather chamber inlet 80 is provided at as low a position as possible in the breather chamber 55. In view of this, in the present embodiment, the breather chamber inlet 80 is provided at the lowest position in the breather chamber 55. As shown in FIG. 6, the second partition wall 53B is formed in a downwardly-depressed curved shape, as the vehicle is seen from sideways. A front portion of the breather chamber inlet 80 of the second partition wall 53B is curved upward while extending forward. A rear portion of the breather chamber inlet 80 of the second partition wall 53B is curved upward while extending rearward.

In the present embodiment, the breather chamber inlet 80 of the partition wall 53 is provided at a relatively rearward position. The breather chamber inlet 80 is provided closer to the rear end 55re relative to the middle between the front end 55fe and the rear end 55re of the breather chamber 55. As described above, the breather chamber inlet 80 is formed in the second partition wall 53B of the second case component 52. In FIG. 5, the breather chamber inlet 80 is represented by a phantom line. As shown in FIG. 5, the breather chamber inlet 80 is formed at a position that is rearward of a front end 64fe of the fourth gear 64 and forward of a rear end 64re of the fourth gear 64. As shown in FIG. 6, the breather chamber inlet 80 is formed at a position that is rearward of a front end 62fe of the second gear 62 and forward of a rear end 62re of the second gear 62. As shown in FIG. 4, the breather chamber inlet 80 does not overlap with any of the first gear 61, the third gear 63 and the fourth gear 64, as the vehicle is seen from above.

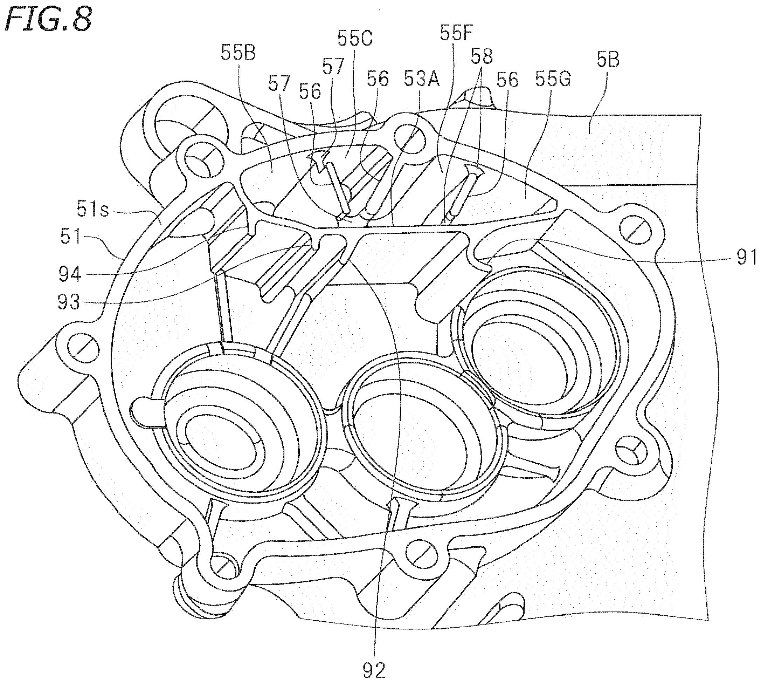

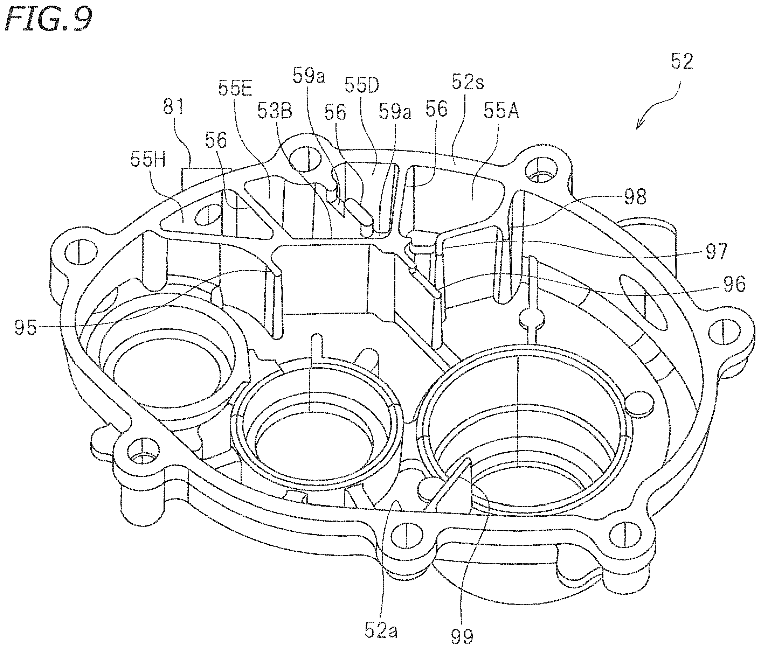

As shown in FIG. 8, downwardly-extending ribs 91 to 94 are provided on the bottom of the first partition wall 53A of the first case component 51. The ribs 91 to 94 are formed integrally with the first partition wall 53A. As shown in FIG. 9, downwardly-extending ribs 95 to 98 are provided on the bottom of the second partition wall 53B of the second case component 52. The ribs 95 to 98 are formed integrally with the second partition wall 53B. An upwardly-extending rib 99 is provided on a bottom wall 52a of the second case component 52.

As shown in FIG. 5 and FIG. 6, the ribs 92 and 96 are arranged forward of the breather chamber inlet 80. The ribs 92 and 96 primarily suppress the flow, into the breather chamber inlet 80, of the oil that is scooped up by the second gear 62. There is no particular limitation on the shapes and the sizes of the ribs 92 and 96. Herein, the ribs 92 and 96 extend rearward while extending downward. The length of the rib 96 is longer than the length of the rib 92.

The ribs 93 and 97 are arranged rearward of the breather chamber inlet 80. The ribs 93 and 97 primarily suppress the flow, into the breather chamber inlet 80, of the oil that is scooped up by the fourth gear 64. There is no particular limitation on the shapes and the sizes of the ribs 93 and 97. Herein, the ribs 93 and 97 extend in the vertically downward direction.

In the first case component 51, the rib 92 forward of the breather chamber inlet 80 is longer than the rib 93 rearward of the breather chamber inlet 80. In the second case component 52, the rib 96 forward of the breather chamber inlet 80 is longer than the rib 97 rearward of the breather chamber inlet 80.

As shown in FIG. 5, the lower portion of the fourth gear 64 is immersed in the oil accumulated in the bottom portion of the case 50. As the fourth gear 64 scoops up oil, it is possible to scatter oil across a wide area of the gear chamber 54. On the other hand, oil is scooped up not only by the fourth gear 64 but also by the second gear 62. As the second gear 62 and the fourth gear 64 both scoop up oil, it is possible to scatter oil across an even larger area. However, since the amount of oil that is scooped up by the fourth gear 64 is relatively large, oil under the second gear 62 tends to move rearward, and the amount of oil that is scooped up by the second gear 62 may become small. In view of this, the rib 99 (see FIG. 6) is provided in the present embodiment. The rib 99 dams the rearward movement of oil so as to ensure a sufficient amount of oil under the second gear 62.

At least a portion of each of the ribs 91 to 98 is in contact with the gasket 59. The first case component 51 and the second case component 52 include a plurality of ribs 90 other than the ribs 91 to 99. These ribs 90 serve solely to increase the rigidity of the case 50. The ribs 90 are not in contact with the gasket 59. The ribs 91 to 98 and the ribs 90 are different from each other in terms of whether at least a potion thereof is in contact with the gasket 59. The left end of the rib 99 is located leftward of the left ends of the ribs 90 of the second case component 52. The rib 99 extends more toward the gasket 59 than the ribs 90 of the second case component 52.

As shown in FIG. 7, the gasket 59 partitions between the first chamber 55A and the second chamber 55B of the breather chamber 55, partitions between the third chamber 55C and the fourth chamber 55D, partitions between the fifth chamber 55E and the sixth chamber 55F, and partitions between the seventh chamber 55G and the eighth chamber 55H. The gasket 59 is in contact with the first partition wall 53A and the second partition wall 53B. The gasket 59 is in contact with the ribs 56 and the ribs 91 to 98. The gasket 59 includes an extension 59A that extends downward from the breather chamber inlet 80 of the partition wall 53, as the vehicle is seen from sideways. The extension 59A defines the left side under the breather chamber inlet 80. Note that the front side and the rear side under the breather chamber inlet 80 are defined by the rib 96 and the rib 97, respectively.

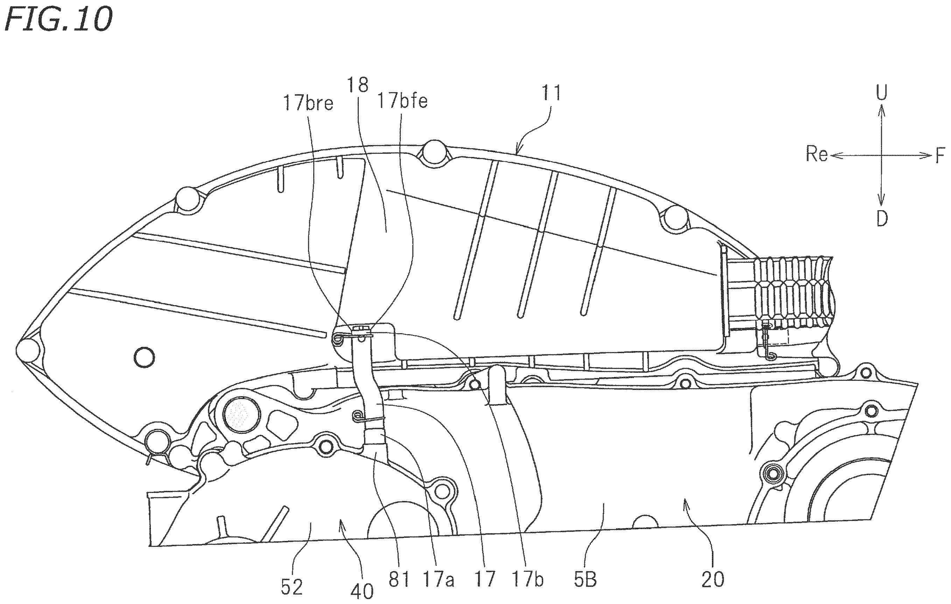

As shown in FIG. 10, an air cleaner 11 is arranged above the power unit 20, as the vehicle is seen from sideways. At least a portion of the air cleaner 11 is arranged above the gear box 40, as the vehicle is seen from sideways. Herein, at least a portion of an air cleaner case 18 of the air cleaner 11 is arranged directly above the gear box 40. The breather chamber 55 of the gear box 40 and the air cleaner case 18 are connected together via a gas passageway 17. While the gas passageway 17 may be a pipe made of a metal, it is herein a hose made of a rubber. Note however that there is no particular limitation on the material of the gas passageway 17. The gas passageway 17 includes an inlet end 17a that is connected to the breather chamber outlet 81 of the gear box 40, and an outlet end 17b that is connected to the air cleaner case 18. A portion of the inlet end 17a is located rearward of a front end 17bfe of the outlet end 17b and forward of a rear end 17bre of the outlet end 17b, as the vehicle is seen from sideways. In other words, at least a portion of the inlet end 17a and at least a portion of the outlet end 17b are located along the same vertical line, as the vehicle is seen from sideways. The gas passageway 17 extends substantially straight in the vertical direction, as the vehicle is seen from sideways. Although not shown in the figure, in the present embodiment, at least a portion of the inlet end 17a and at least a portion of the outlet end 17b overlap with each other, as the vehicle is seen from above.

As described above, with the motorcycle 1 of the present embodiment, the lower end 64b (see FIG. 5) of the fourth gear 64 of the gear box 40 is located below the lower end 62b (see FIG. 6) of the second gear 62. Since the position of the fourth gear 64 is relatively low, the partition wall 53 can be extended rearward to a position above the fourth gear 64 without interferring with the fourth gear 64. That is, the partition wall 53 can be extended further in the rearward direction. Then, as the partition wall 53 is extended to a position above the fourth gear 64, a portion of the breather chamber 55 is extended to a position rearward of the front end 43fe of the third rotation shaft 43, as shown in FIG. 6. Therefore, the size of the breather chamber 55 in the front-rear direction is large. According to the present embodiment, it is possible to expand the volume of the breather chamber 55.

Since the position of the fourth gear 64 is relatively low, the position of the extended portion of the partition wall 53 (i.e., a portion of the partition wall 53 that is above the fourth gear 64) can be lowered. By lowering the position of the extended portion of the partition wall 53, it is possible to increase the size in the up-down direction of the breather chamber 55. Therefore, it is possible to further expand the volume of the breather chamber 55.

Now, since the lower end 64b of the fourth gear 64 is located below the lower end 62b of the second gear 62, the amount of lubricating oil that is scooped up by the fourth gear 64 is relatively large. When the breather chamber inlet 80 that allows communication between the gear chamber 54 and the breather chamber 55 is provided near the fourth gear 64, the amount of lubricating oil coming into the breather chamber 55 from the gear chamber 54 may possibly become large. However, with the motorcycle 1 of the present embodiment, the position of the breather chamber inlet 80 and the position of the fourth gear 64 are staggered from each other in the left-right direction, as shown in FIG. 4. The breather chamber inlet 80 is located rightward of the gasket 59, and the fourth gear 64 is located leftward of the gasket 59. The breather chamber inlet 80 does not overlap with the fourth gear 64, as the vehicle is seen from above. Therefore, it is possible to suppress the flow, into the breather chamber 55, of the lubricating oil that is scooped up by the fourth gear 64.

According to the present embodiment, the breather chamber inlet 80 is provided at a position rearward of the front end 64fe of the fourth gear 64 and forward of the rear end 64re. Thus, by arranging the breather chamber inlet 80 at a position that is more rearward than with conventional techniques, it is possible to provide a hole in an extended portion of the partition wall 53 that is arranged at a relatively low position. Therefore, it is possible to provide the breather chamber inlet 80 in a lower portion of the partition wall 53, and it is therefore easier to bring oil back into the gear chamber 54 from the breather chamber 55.

Thus, according to the present embodiment, it is possible to realize both a sufficient volume of the breather chamber 55 and the ease for oil to return into the gear chamber 54 from the breather chamber 55.

As shown in FIG. 4, the breather chamber inlet 80 is arranged rightward of the gasket 59, and the fourth gear 64 is arranged leftward of the gasket 59. As shown in FIG. 7, the gasket 59 includes the extension 59A that extends downward from the breather chamber inlet 80, as the vehicle is seen from sideways. Therefore, with the extension 59A of the gasket 59, it is possible to further suppress the flow, into the breather chamber 55, of the oil that is scooped up by the fourth gear 64.

According to the present embodiment, the recessed portion 80c is formed in the second mating surface 52s of the second case component 52 (specifically, the second mating surface 52s of the second partition wall 53B). The breather chamber inlet 80 is defined by the second mating surface 52s and the gasket 59. The first case component 51 and the second case component 52 are assembled together so that the gasket 59 is sandwiched between the first mating surface 51s and the second mating surface 52s. Therefore, according to the present embodiment, it is possible to easily form the breather chamber inlet 80 simply by assembling the first case component 51 and the second case component 52 together. There is no particular limitation on the manufacturing method of the first case component 51 and the second case component 52. According to the present embodiment, there is no need to cut the breather chamber inlet 80, and the advantageous effect that it is easy to form the breather chamber inlet 80 is particularly pronounced when the first case component 51 and the second case component 52 are manufactured by casting.

Note that in the present embodiment, since the breather chamber inlet 80 is formed in the second partition wall 53B, the recessed portion 80c is formed in the second mating surface 52s of the second partition wall 53B. However, when the breather chamber inlet 80 is formed in the first partition wall 53A, the recessed portion 80c that is recessed leftward may be formed in the first mating surface 51s of the first partition wall 53A. In such a case, the breather chamber inlet 80 is defined by the first mating surface 51s of the first case component 51 and the gasket 59.

As shown in FIG. 6, the case 50 includes the rib 96 that extends downward from a portion of the partition wall 53 that is forward of the breather chamber inlet 80, and the rib 97 that extends downward from a portion of the partition wall 53 that is rearward of the breather chamber inlet 80. As shown in FIG. 7, the extension 59A of the gasket 59 is in contact with the ribs 96 and 97. Therefore, the front side, the rear side and the left side under the breather chamber inlet 80 are defined by the rib 96, the rib 97 and the extension 59A of the gasket 59, respectively. Thus, it is possible to further suppress the flow of the oil into the breather chamber 55.

As shown in FIG. 6, the breather chamber inlet 80 is located rearward of the front end 62fe of the second gear 62 and forward of the rear end 62re. The oil that is scooped up by the second gear 62 may possibly flow into the breather chamber inlet 80. However, the rib 96 extends rearward and downward from a portion of the partition wall 53 that is forward of the breather chamber inlet 80. Therefore, with the rib 96, it is possible to effectively suppress the flow, into the breather chamber 55, of the oil that is scooped up by the second gear 62.

According to the present embodiment, the outer diameter of the fourth gear 64 is greater than any of the outer diameter of the first gear 61, the outer diameter of the second gear 62 and the outer diameter of the third gear 63. Thus, it is possible to efficiently decelerate by the gear box 40.

According to the present embodiment, as shown in FIG. 4, the first gear 61 and the second gear 62 are arranged rightward of the gasket 59, and the third gear 63 and the fourth gear 64 are arranged leftward of the gasket 59. As compared with a case where the first to fourth gears 61 to 64 are all arranged rightward of the gasket 59, it is possible to reduce the number of gears to be arranged rightward of the gasket 59. Thus, it is possible to reduce the size of the second case component 52 in the vehicle width direction. Therefore, it is possible to make the second case component 52 smaller. The second case component 52 is a component that is assembled to the second unit case component 5B including the first case component 51. According to the present embodiment, since the second case component 52 is small, it is easy to assemble the second case component 52.

As shown in FIG. 10, the breather chamber 55 of the gear box 40 and the air cleaner case 18 are connected together via the gas passageway 17. According to the present embodiment, the breather chamber outlet 81 is arranged relatively forward as shown in FIG. 6. As shown in FIG. 10, a portion of the inlet end 17a of the gas passageway 17 is located rearward of the front end 17bfe of the outlet end 17b and forward of the rear end 17bre of the outlet end 17b, as the vehicle is seen from sideways. The gas passageway 17 is arranged substantially straight in the vertical direction. Thus, the gas passageway 17 can be made short. It is also possible to reduce the size of the gas passageway 17 in the front-rear direction, and to make the gas passageway 17 compact.

Now, as shown in FIG. 6, a portion of the partition wall 53 that extends from forward of the breather chamber inlet 80 to rearward of the breather chamber inlet 80 is formed in a downwardly-depressed curved shape, as the vehicle is seen from sideways. A portion of the partition wall 53 that is forward of the breather chamber inlet 80 is curved upward while extending forward. A portion of the partition wall 53 that is rearward of the breather chamber inlet 80 is curved upward while extending rearward. Therefore, even if the attitude of the case 50 is inclined so as to somewhat raise or lower the front side thereof, the breather chamber inlet 80 remains to be at the lowest position of the partition wall 53.

For example, as shown in FIG. 3, L1 denotes the straight line that connects between the center 43c of the third rotation shaft 43 and the center 42c of the second rotation shaft 42, as the vehicle is seen from sideways. LH denotes the horizontal line that passes through the center 43c of the third rotation shaft 43, as the vehicle is seen from sideways. As the vehicle is seen from sideways, θ denotes the angle formed between the straight line L1 and the horizontal line LH (note that the smaller one of the angles formed between the straight line L1 and the horizontal line LH). The partition wall 53 of the gear box 40 is formed in a shape such that the position of the breather chamber inlet 80 is the lowest position of the partition wall 53 whether the angle θ is the first angle and the second angle. Note that the first angle and the second angle are each an angle in a predetermined range, e.g., an angle in a range of -20 degrees to +20 degrees.

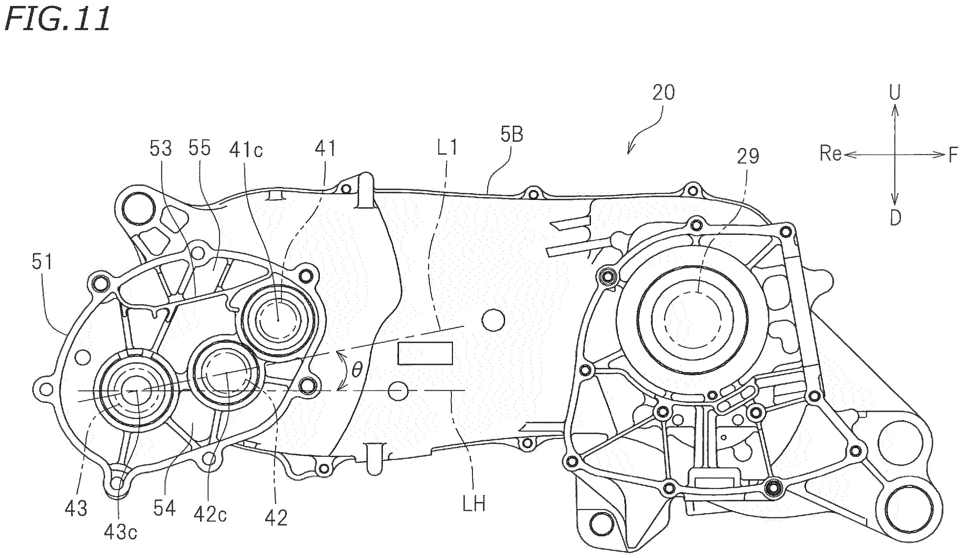

Therefore, as long as the angle θ is in a predetermined range, the breather chamber inlet 80 is at the lowest position of the partition wall 53. Thus, as shown in FIG. 11, for example, the second case component 52 of the same specifications can be assembled for the first case component 51 of the motorcycle 1 of different specifications with a different angle θ. Therefore, second case components 52 of the same specifications can be commonly used for a plurality of first case components 51 of different specifications. Thus, by using common components, it is possible to reduce the cost of the gear box 40 while realizing the advantageous effect described above.

Note that the power unit 20 of FIG. 3 is an example where the angle θ is 0 degree (in other words, an example where the straight line L1 and the horizontal line LH coincide with each other), and the power unit 20 of FIG. 11 is an example where the angle θ is 11 degrees. 0 degree and 11 degrees are examples of the first angle and the second angle, respectively. The partition wall 53 is formed in a shape such that the position of the breather chamber inlet 80 is the lowest position of the partition wall 53 whether the angle θ is 0 degree or 11 degrees.

With the power unit 20 of FIG. 3, the height of the center 43c of the third rotation shaft 43 and the height of the center 42c of the second rotation shaft 42 are equal to each other. With the power unit 20 of FIG. 11, the center 43c of the third rotation shaft 43 is lower than the center 42c of the second rotation shaft 42. With either power unit 20, the fourth gear 64 can be arranged at a relatively low position since the height of the center 43c of the third rotation shaft 43 is low. Therefore, it is possible to easily realize both a sufficient volume of the breather chamber 55 and the ease for oil to return into the gear chamber 54 from the breather chamber 55.

In the embodiment described above, the first rotation shaft 41 of the gear box 40 serves also as the secondary sheave shaft of the CVT 22. The first rotation shaft 41 of the gear box 40 and the secondary sheave shaft of the CVT 22 are an integral member. However, the first rotation shaft 41 of the gear box 40 and the secondary sheave shaft of the CVT 22 may be formed as separate members and linked to each other.

In the embodiment described above, the transmission is the CVT 22. However, the transmission may be a stepwise transmission including a plurality of gears.

In the embodiment described above, the engine 21 is a water-cooled engine. However, the engine 21 may be an air-cooled engine. The drive source for running may be an electric motor.

The power unit 20 may be formed in a left-right symmetric shape. The second case component 52 may be arranged leftward of the first case component 51. As shown in FIG. 4, the breather chamber inlet 80 is arranged rightward of the right end of the fourth gear 64 in the embodiment described above. However, the second case component 52 may be arranged leftward of the first case component 51, and the breather chamber inlet 80 may be arranged leftward of the left end of the fourth gear 64.

The motorcycle may be any type of a motorcycle. A straddled vehicle refers to a vehicle that is straddled by a passenger.

### REFERENCE SIGNS LIST

1: Motorcycle (straddled vehicle), 9: Rear wheel (driven wheel), 17: Gas passageway, 17a: Inlet end, 17b: Outlet end, 17bfe: Front end of outlet end, 17bre: Rear end of outlet end, 18: Air cleaner case, 41: First rotation shaft, 41c: Center of first rotation shaft, 41re: Rear end of first rotation shaft, 42: Second rotation shaft, 42c: Center of second rotation shaft, 43: Third rotation shaft, 43A: First portion of third rotation shaft, 43B: Second portion of third rotation shaft, 43c: Center of third rotation shaft, 43fe: Front end of third rotation shaft, 50: Case, 51: First case component, 52: Second case component, 53: Partition wall, 53A: First partition wall, 53B: Second partition wall, 54: Gear chamber, 55: Breather chamber, 55fe: Front end of breather chamber, 55re: Rear end of breather chamber, 59: Gasket, 59A: Extension, 61: First gear, 62: Second gear, 62b: Lower end of second gear, 62fe: Front end of second gear, 62re: Rear end of second gear, 63: Third gear, 64: Fourth gear, 64b: Lower end of fourth gear, 64fe: Front end of fourth gear, 64re: Rear end of fourth gear, 80: Breather chamber inlet (hole), 81: Breather chamber outlet (another hole), 96: Rib, 97: Rib, L1: Straight line connecting between center of third rotation shaft and center of second rotation shaft, LH: Horizontal line passing through center of third rotation shaft

## Claims

1. A straddled vehicle (1) comprising:
a case (50);
a partition wall (53) that is arranged inside the case (50) and partitions the inside of the case (50) into a gear chamber (54) and a breather chamber (55) above the gear chamber (54);
a first, second and third rotation shaft (41, 42, 43) that are rotatably supported on the case (50) and extend in a vehicle width direction;
a first gear (61) that is provided on the first rotation shaft (41) and arranged in the gear chamber (54);
a second gear (62) that is provided on the second rotation shaft (42), arranged in the gear chamber (54) and meshes with the first gear (61);
a third gear (63) that is provided on the second rotation shaft (42) and arranged in the gear chamber (54); and
a fourth gear (64) that is provided on the third rotation shaft (43), arranged in the gear chamber (54) and meshes with the third gear (63), wherein
a center (42c) of the second rotation shaft (42) is arranged rearward of a center (41c) of the first rotation shaft (41);
a center (43c) of the third rotation shaft (43) is arranged rearward of the center (42c) of the second rotation shaft (42), **characterized in that**
a lower end (64b) of the fourth gear (64) is located below a lower end (62b) of the second gear (62);
a front end (55fe) of the breather chamber (55) is located forward of a rear end (41re) of the first rotation shaft (41), and a rear end (55re) of the breather chamber (55) is located rearward of a front end (43fe) of the third rotation shaft (43);
a hole (80) that allows communication between the gear chamber (54) and the breather chamber (55) is formed at a position of the partition wall (53) that is rearward of a front end (64fe) of the fourth gear (64) and forward of a rear end (64re) of the fourth gear (64); the hole (80) is arranged rightward of a right end of the fourth gear (64) or leftward of a left end of the fourth gear (64); and
the hole (80) does not overlap with the fourth gear (64), as the vehicle is seen from above.

2. The straddled vehicle (1) according to claim 1, **characterized in that** the case (50) includes a first case component (51), and a second case component (52) that is arranged closer to a center in the vehicle width direction relative to the first case component (51); the straddled vehicle (1) includes a gasket (59) that is sandwiched between the first case component (51) and the second case component (52);
one of the fourth gear (64) and the hole (80) is arranged leftward of the gasket (59), and the other one of the fourth gear (64) and the hole (80) is arranged rightward of the gasket (59); and
the gasket (59) includes an extension (59A) that extends downward from the hole (80) of the partition wall (53), as the vehicle is seen from sideways.

3. The straddled vehicle (1) according to claim 2, **characterized in that** the first case component (51) includes a first mating surface (51s);
the second case component (52) includes a second mating surface (52s) that faces the first mating surface (51s) with the gasket (59) sandwiched therebetween;
a recessed portion (80c) is formed in the first mating surface (51s) or the second mating surface (52s); and
the hole (80) is defined by the recessed portion (80c) of the first mating surface (51s) or the second mating surface (52s) and the gasket (59).

4. The straddled vehicle (1) according to claim 2 or 3, **characterized in that** the straddled vehicle (1) includes a rib (96, 97) extending downward from a portion of the partition wall (53) that is forward or rearward of the hole (80); and
a portion of the extension (59A) of the gasket (59) is in contact with the rib (96, 97).

5. The straddled vehicle (1) according to claim 4, **characterized in that** the hole (80) is located rearward of a front end (62fe) of the second gear (62) and forward of a rear end (62re) of the second gear (62); and
the rib (96) extends rearward and downward from a portion of the partition wall (53) that is forward of the hole (80).

6. The straddled vehicle (1) according to any one of claims 2 to 5, **characterized in that** the partition wall (53) includes a first partition wall (53A) provided on the first case component (51) and a second partition wall (53B) provided on the second case component (52); and the hole (80) is formed in the second partition wall (53B).

7. The straddled vehicle (1) according to any one of claims 1 to 6, **characterized in that** an outer diameter (64D) of the fourth gear (64) is greater than any of outer diameters of the first gear (61), the second gear (62) and the third gear (63).

8. The straddled vehicle (1) according to any one of claims 1 to 7, **characterized in that** the third rotation shaft (43) includes a first portion (43A) that is arranged inside the gear chamber (54), and a second portion (43B) that extends from the case (50) toward a center in the vehicle width direction and is arranged outside the gear chamber (54); and
the straddled vehicle (1) includes a driven wheel (9) that is linked to the second portion (43B) of the third rotation shaft (43).

9. The straddled vehicle (1) according to claim 1, **characterized in that** the case (50) includes a first case component (51) and a second case component (52) that is arranged closer to a center in the vehicle width direction relative to the first case component (51); the straddled vehicle (1) includes a gasket (59) that is sandwiched between the first case component (51) and the second case component (52); and
the first gear (61) and the second gear (62) are arranged on one of a right side and a left side of the gasket (59), and the third gear (63) and the fourth gear (64) are arranged on the other one of the right side and the left side of the gasket (59).

10. The straddled vehicle (1) according to any one of claims 1 to 9, **characterized in that** as the vehicle is seen from sideways, a portion of the partition wall (53) that is forward of the hole (80) extends upward while extending forward, a portion of the partition wall (53) that is rearward of the hole (80) extends upward while extending rearward, and a portion of the partition wall (53) that extends from forward of the hole (80) to rearward of the hole (80) is formed in a downwardly-depressed curved shape.

11. The straddled vehicle (1) according to any one of claims 1 to 10, **characterized in that** the partition wall (53) is formed in a shape such that a position of the hole (80) is a lowest position of the partition wall (53), as the vehicle is seen from sideways, whether an angle (θ) is a first angle or a second angle, wherein the angle (θ) is an angle formed between a straight line (L1) that extends between a center (43c) of the third rotation shaft (43) and a center (42c) of the second rotation shaft (42) and a horizontal line (LH) that passes through the center (43c) of the third rotation shaft (43).

12. The straddled vehicle (1) according to any one of claims 1 to 11, **characterized in that** a height of the center (43c) of the third rotation shaft (43) is equal to a height of the center (42c) of the second rotation shaft (42) or the center (43c) of the third rotation shaft (43) is lower than the center (42c) of the second rotation shaft (42).

13. The straddled vehicle (1) according to any one of claims 1 to 12, **characterized in that** the case (50) is formed with another hole (81) that is located forward of the hole (80) and that connects between inside and outside of the breather chamber (55);
the straddled vehicle (1) includes an air cleaner case (18) at least a portion of which is arranged above the case (50), as the vehicle is seen from sideways;
the straddled vehicle (1) includes a gas passageway (17) that includes an inlet end (17a) connected to the other hole (81) of the case (50) and an outlet end (17b) connected to the air cleaner case (18); and
as the vehicle is seen from sideways, a portion of the inlet end (17a) is located rearward of a front end (17bfe) of the outlet end (17b) and forward of a rear end (17bre) of the outlet end (17b).

## Patentansprüche

1. Ein Spreiz-Sitz-Fahrzeug (1), umfassend:
ein Gehäuse (50);
eine Trenn-Wand (53), die innerhalb des Gehäuses (50) angeordnet ist und das Innere des Gehäuses (50) in eine Getriebe-Kammer (54) und eine Entlüftungs-Kammer (55) oberhalb der Getriebe-Kammer (54) unterteilt;
eine erste, zweite und dritte Dreh-Welle (41, 42, 43), die drehbar am Gehäuse (50) gelagert sind und sich in einer Fahrzeug-Breiten-Richtung erstrecken;
ein erstes Zahnrad (61), das auf der ersten Dreh-Welle (41) vorgesehen und in der Getriebe-Kammer (54) angeordnet ist;
ein zweites Zahnrad (62), das auf der zweiten Dreh-Welle (42) vorgesehen ist, in der Getriebe-Kammer (54) angeordnet ist und mit dem ersten Zahnrad (61) kämmt;
ein drittes Zahnrad (63), das auf der zweiten Dreh-Welle (42) vorgesehen und in der Getriebe-Kammer (54) angeordnet ist; und
viertes Zahnrad (64), das auf der dritten Dreh-Welle (43) vorgesehen ist, in der Getriebe-Kammer (54) angeordnet ist und mit dem dritten Zahnrad (63) kämmt, wobei ein Zentrum (42c) der zweiten Dreh-Welle (42) hinter einem Zentrum (41c) der ersten Dreh-Welle (41) angeordnet ist;
ein Zentrum (43c) der dritten Dreh-Welle (43) hinter dem Zentrum (42c) der zweiten Dreh-Welle (42) angeordnet ist, **dadurch gekennzeichnet, dass**
ein unteres Ende (64b) des vierten Zahnrads (64) unterhalb eines unteren Endes (62b) des zweiten Zahnrads (62) angeordnet ist;
ein vorderes Ende (55fe) der Entlüftungs-Kammer (55) vor einem hinteren Ende (41re) der ersten Dreh-Welle (41) angeordnet ist, und ein hinteres Ende (55re) der Entlüftungs-Kammer (55) hinter einem vorderen Ende (43fe) der dritten Dreh-Welle (43) angeordnet ist;
ein Loch (80), das eine Verbindung zwischen der Getriebe-Kammer (54) und der Entlüftungs-Kammer (55) ermöglicht, an einer Position der Trenn-Wand (53) ausgebildet ist, die sich hinter einem vorderen Ende (64fe) des vierten Zahnrades (64) und vor einem hinteren Ende (64re) des vierten Zahnrades (64) befindet;
das Loch (80) rechts von einem rechten Ende des vierten Zahnrades (64) oder links von einem linken Ende des vierten Zahnrades (64) angeordnet ist; und
das Loch (80) sich überschneidet sich nicht mit dem vierten Zahnrad (64) überschneidet, wenn das Fahrzeug von oben betrachtet ist.

2. Das Spreiz-Sitz-Fahrzeug (1) gemäß Anspruch 1, **dadurch gekennzeichnet, dass** das Gehäuse (50) eine erste Gehäuse-Komponente (51) und eine zweite Gehäuse-Komponente (52) beinhaltet, die in Fahrzeug-Breiten-Richtung näher zu einer Mitte angeordnet ist als die erste Gehäuse-Komponente (51);
das Spreiz-Sitz-Fahrzeug (1) eine Dichtung (59) beinhaltet, die zwischen der ersten Gehäuse-Komponente (51) und der zweiten Gehäuse-Komponente (52) angeordnet ist;
eines von dem vierten Zahnrad (64) und dem Loch (80) links von der Dichtung (59) angeordnet ist, und das andere von dem vierten Zahnrad (64) und dem Loch (80) rechts von der Dichtung (59) angeordnet ist; und
die Dichtung (59) eine Verlängerung (59A) aufweist, die sich von dem Loch (80) der Trenn-Wand (53) nach unten erstreckt, wenn das Fahrzeug von der Seite betrachtet ist.

3. Das Spreiz-Sitz-Fahrzeug (1) gemäß Anspruch 2, **dadurch gekennzeichnet, dass** die erste Gehäuse-Komponente (51) eine erste Passfläche (51s) aufweist;
die zweite Gehäuse-Komponente (52) eine zweite Passfläche (52s) aufweist, die der ersten Passfläche (51s) zugewandt ist, wobei die Dichtung (59) sandwichartig dazwischen angeordnet ist;
ein ausgesparter Abschnitt (80c) in der ersten Passfläche (51s) oder der zweiten Passfläche (52s) ausgebildet ist; und
das Loch (80) durch den ausgesparten Abschnitt (80c) der ersten Passfläche (51s) oder der zweiten Passfläche (52s) und der Dichtung (59) definiert ist.

4. Das Spreiz-Sitz-Fahrzeug (1) gemäß Anspruch 2 oder 3, **dadurch gekennzeichnet, dass** das Spreiz-Sitz-Fahrzeug (1) eine Rippe (96, 97) beinhaltet, die sich von einem Abschnitt der Trenn-Wand (53), der vor oder hinter dem Loch (80) liegt, nach unten erstreckt; und
ein Abschnitt der Verlängerung (59A) der Dichtung (59) in Kontakt mit der Rippe (96, 97) ist.

5. Das Spreiz-Sitz-Fahrzeug (1) gemäß Anspruch 4, **dadurch gekennzeichnet, dass** das Loch (80) hinter einem vorderen Ende (62fe) des zweiten Zahnrads (62) und vor einem hinteren Ende (62re) des zweiten Zahnrads (62) angeordnet ist; und
die Rippe (96) sich von einem Abschnitt der Trenn-Wand (53), der sich vor dem Loch (80) befindet, nach hinten und unten erstreckt.

6. Das Spreiz-Sitz-Fahrzeug (1) gemäß irgendeinem der Ansprüche 2 bis 5, **dadurch gekennzeichnet, dass** die Trenn-Wand (53) eine erste Trenn-Wand (53A), die an der ersten Gehäuse-Komponente (51) vorgesehen ist, und eine zweite Trenn-Wand (53B), die an der zweiten Gehäuse-Komponente (52) vorgesehen ist, beinhaltet; und das Loch (80) ist in der zweiten Trenn-Wand (53B) ausgebildet.

7. Das Spreiz-Sitz-Fahrzeug (1) gemäß irgendeinem der Ansprüche 1 bis 6, **dadurch gekennzeichnet, dass** ein Außendurchmesser (64D) des vierten Zahnrads (64) größer ist als jeder der Außendurchmesser des ersten Zahnrads (61), des zweiten Zahnrads (62) und des dritten Zahnrads (63).

8. Das Spreiz-Sitz-Fahrzeug (1) gemäß irgendeinem der Ansprüche 1 bis 7, **dadurch gekennzeichnet, dass** die dritte Dreh-Welle (43) einen ersten Abschnitt (43A), der innerhalb der Getriebe-Kammer (54) angeordnet ist, und einen zweiten Abschnitt (43B) aufweist, der sich von dem Gehäuse (50) in Richtung einer Mitte in Fahrzeug-Breiten-Richtung erstreckt und außerhalb der Getriebe-Kammer (54) angeordnet ist; und
das Spreiz-Sitz-Fahrzeug (1) ein angetriebenes Rad (9) enthält, das mit dem zweiten Abschnitt (43B) der dritten Dreh-Welle (43) verbunden ist.

9. Das Spreiz-Sitz-Fahrzeug (1) gemäß Anspruch 1, **dadurch gekennzeichnet, dass** das Gehäuse (50) eine erste Gehäuse-Komponente (51) und eine zweite Gehäuse-Komponente (52) beinhaltet, die in Fahrzeug-Breiten-Richtung näher zu einer Mitte angeordnet ist als die erste Gehäuse-Komponente (51);
das Spreiz-Sitz-Fahrzeug (1) eine Dichtung (59) beinhaltet, die zwischen der ersten Gehäuse-Komponente (51) und der zweiten Gehäuse-Komponente (52) aufgenommen ist; und
das erste Zahnrad (61) und das zweite Zahnrad (62) auf einer von einer rechten Seite und einer linken Seite der Dichtung (59) angeordnet sind, und das dritte Zahnrad (63) und das vierte Zahnrad (64) auf der anderen von der rechten Seite und der linken Seite der Dichtung (59) angeordnet sind.

10. Das Spreiz-Sitz-Fahrzeug (1) gemäß irgendeinem der Ansprüche 1 bis 9, **dadurch gekennzeichnet, dass,** wenn das Fahrzeug von der Seite betrachte ist, ein Abschnitt der Trenn-Wand (53), der vor dem Loch (80) ist, sich nach oben erstreckt, während er sich nach vome erstreckt, ein Abschnitt der Trenn-Wand (53), der hinter dem Loch (80) ist, sich nach oben erstreckt, während er sich nach hinten erstreckt, und ein Abschnitt der Trenn-Wand (53), der sich von vor dem Loch (80) bis hinter dem Loch (80) erstreckt, in einer nach unten abgesenkten gekrümmten Form ausgebildet ist.

11. Das Spreiz-Sitz-Fahrzeug (1) gemäß irgendeinem der Ansprüche 1 bis 10, **dadurch gekennzeichnet, dass** die Trenn-Wand (53) in einer Form ausgebildet ist, so dass eine Position des Lochs (80) eine niedrigste Position der Trenn-Wand (53) ist, wenn das Fahrzeug von der Seite betrachte ist, ob ein Winkel (θ) ein erster Winkel oder ein zweiter Winkel ist, wobei der Winkel (θ) ein Winkel ist, der zwischen einer geraden Linie (L1), die sich zwischen einer Mitte (43c) der dritten Dreh-Welle (43) und einer Mitte (42c) der zweiten Dreh-Welle (42) erstreckt, und einer horizontalen Linie (LH), die durch die Mitte (43c) der dritten Dreh-Welle (43) verläuft, gebildet wird.

12. Das Spreiz-Sitz-Fahrzeug (1) gemäß irgendeinem der Ansprüche 1 bis 11, **dadurch gekennzeichnet, dass** eine Höhe der Mitte (43c) der dritten Dreh-Welle (43) gleich einer Höhe der Mitte (42c) der zweiten Dreh-Welle (42) ist oder die Mitte (43c) der dritten Dreh-Welle (43) niedriger ist als die Mitte (42c) der zweiten Dreh-Welle (42).

13. Das Spreiz-Sitz-Fahrzeug (1) gemäß irgendeinem der Ansprüche 1 bis 12, **dadurch gekennzeichnet, dass** das Gehäuse (50) mit einem weiteren Loch (81) ausgebildet ist, das sich vor dem Loch (80) befindet und das eine Verbindung zwischen dem Inneren und dem Äußeren der Entlüftungs-Kammer (55) herstellt;
das Spreiz-Sitz-Fahrzeug (1) ein Luftfilter-Gehäuse (18) aufweist, von dem zumindest ein Teil oberhalb des Gehäuses (50) angeordnet ist, wenn das Fahrzeug von der Seite betrachtet ist;
das Spreiz-Sitz-Fahrzeug (1) einen Gas-Durchgang (17) aufweist, der ein EinlassEnde (17a), das mit dem anderen Loch (81) des Gehäuses (50) verbunden ist, und ein Auslass-Ende (17b), das mit dem Luftfilter-Gehäuse (18) verbunden ist, aufweist; und
wenn das Fahrzeug von der Seite betrachtet ist, sich ein Abschnitt des Einlass-Endes (17a) hinter einem vorderen Ende (17bfe) des Auslass-Endes (17b) und vor einem hinteren Ende (17bre) des Auslass-Endes (17b) angeordnet ist.

## Revendications

1. Véhicule à enfourcher (1) comprenant :
un carter (50) ;
une paroi de séparation (53) qui est agencée à l'intérieur du carter (50) et divise l'intérieur du carter (50) en une chambre d'engrenages (54) et une chambre de reniflard (55) au-dessus de la chambre d'engrenages (54) ;
un premier, un deuxième et un troisième arbre de rotation (41, 42, 43) qui sont supportés de manière rotative sur le carter (50) et s'étendent dans une direction de largeur de véhicule ;
un premier engrenage (61) qui est agencé sur le premier arbre de rotation (41) et disposé dans la chambre d'engrenages (54) ;
un deuxième engrenage (62) qui est agencé sur le deuxième arbre de rotation (42), disposé dans la chambre d'engrenages (54) et s'engrène avec le premier engrenage (61);
un troisième engrenage (63) qui est agencé sur le deuxième arbre de rotation (42) et disposé dans la chambre d'engrenages (54) ; et
un quatrième engrenage (64) qui est agencé sur le troisième arbre de rotation (43), disposé dans la chambre d'engrenages (54) et s'engrène avec le troisième engrenage (63), dans lequel
un centre (42c) du deuxième arbre de rotation (42) est disposé en arrière d'un centre (41c) du premier arbre de rotation (41) ;
un centre (43c) du troisième arbre de rotation (43) est disposé en arrière du centre (42c) du deuxième arbre de rotation (42), **caractérisé en ce que** une extrémité inférieure (64b) du quatrième engrenage (64) est située en dessous d'une extrémité inférieure (62b) du deuxième engrenage (62) ;
une extrémité avant (55fe) de la chambre de reniflard (55) est située en avant d'une extrémité arrière (41re) du premier arbre de rotation (41), et une extrémité arrière (55re) de la chambre de reniflard (55) est située en arrière d'une extrémité avant (43fe) du troisième arbre de rotation (43) ;
un trou (80) qui permet une communication entre la chambre d'engrenages (54) et la chambre de reniflard (55) est formé à une position de la paroi de séparation (53) qui est en arrière d'une extrémité avant (64fe) du quatrième engrenage (64) et en avant d'une extrémité arrière (64re) du quatrième engrenage (64) ;
le trou (80) est disposé à droite d'une extrémité droite du quatrième engrenage (64) ou à gauche d'une extrémité gauche du quatrième engrenage (64) ; et
le trou (80) ne chevauche pas le quatrième engrenage (64), lorsque le véhicule est observé de dessus.

2. Véhicule à enfourcher (1) selon la revendication 1, **caractérisé en ce que** le carter (50) comprend un premier composant de carter (51), et un second composant de carter (52) qui est disposé plus proche d'un centre dans la direction de largeur de véhicule par rapport au premier composant de carter (51) ;
le véhicule à enfourcher (1) comprend un joint (59) qui est enserré entre le premier composant de carter (51) et le second composant de carter (52) ;
l'un du quatrième engrenage (64) et du trou (80) est disposé à gauche du joint (59), et l'autre du quatrième engrenage (64) et du trou (80) est disposé à droite du joint (59) ; et
le joint (59) comprend une extension (59A) qui s'étend vers le bas depuis le trou (80) de la paroi de séparation (53), lorsque le véhicule est observé de côté.

3. Véhicule à enfourcher (1) selon la revendication 2, **caractérisé en ce que** le premier composant de carter (51) comprend une première surface d'accouplement (51s) ;
le second composant de carter (52) comprend une seconde surface d'accouplement (52s) qui fait face à la première surface d'accouplement (51s) avec le joint (59) enserré entre elles ;
une partie évidée (80c) est formée dans la première surface d'accouplement (51s) ou la seconde surface d'accouplement (52s) ; et
le trou (80) est défini par la partie évidée (80c) de la première surface d'accouplement (51s) ou de la seconde surface d'accouplement (52s) et le joint (59).

4. Véhicule à enfourcher (1) selon la revendication 2 ou 3, **caractérisé en ce que** le véhicule à enfourcher (1) comprend une nervure (96, 97) s'étendant vers le bas depuis une partie de la paroi de séparation (53) qui est en avant ou en arrière du trou (80) ; et
une partie de l'extension (59A) du joint (59) est en contact avec la nervure (96, 97).

5. Véhicule à enfourcher (1) selon la revendication 4, **caractérisé en ce que** le trou (80) est situé en arrière d'une extrémité avant (62fe) du deuxième engrenage (62) et en avant d'une extrémité arrière (62re) du deuxième engrenage (62) ; et
la nervure (96) s'étend en arrière et vers le bas d'une partie de la paroi de séparation (53) qui est en avant du trou (80).

6. Véhicule à enfourcher (1) selon l'une quelconque des revendications 2 à 5, **caractérisé en ce que** la paroi de séparation (53) comprend une première paroi de séparation (53A) agencée sur le premier composant de carter (51) et une seconde paroi de séparation (53B) agencée sur le second composant de carter (52) ; et
le trou (80) est formé dans la seconde paroi de séparation (53B).

7. Véhicule à enfourcher (1) selon l'une quelconque des revendications 1 à 6, **caractérisé en ce qu'**un diamètre extérieur (64D) du quatrième engrenage (64) est supérieur à l'un quelconque de diamètres extérieurs du premier engrenage (61), du deuxième engrenage (62) et du troisième engrenage (63).

8. Véhicule à enfourcher (1) selon l'une quelconque des revendications 1 à 7, **caractérisé en ce que** le troisième arbre de rotation (43) comprend une première partie (43A) qui est disposée à l'intérieur de la chambre d'engrenages (54), et une seconde partie (43B) qui s'étend du carter (50) vers un centre dans la direction de largeur de véhicule et est disposé à l'extérieur de la chambre d'engrenages (54) ; et
le véhicule à enfourcher (1) comprend une roue menée (9) qui est liée à la seconde partie (43B) du troisième arbre de rotation (43).

9. Véhicule à enfourcher (1) selon la revendication 1, **caractérisé en ce que** le carter (50) comprend un premier composant de carter (51) et un second composant de carter (52) qui est disposé plus proche d'un centre dans la direction de largeur de véhicule par rapport au premier composant de carter (51) ;
le véhicule à enfourcher (1) comprend un joint (59) qui est enserré entre le premier composant de carter (51) et le second composant de carter (52) ; et
le premier engrenage (61) et le deuxième engrenage (62) sont disposés sur l'un d'un côté droit et d'un côté gauche du joint (59), et le troisième engrenage (63) et le quatrième engrenage (64) sont disposés sur l'autre du côté droit et du côté gauche du joint (59).

10. Véhicule à enfourcher (1) selon l'une quelconque des revendications 1 à 9, **caractérisé en ce que**, lorsque le véhicule est observé de côté, une partie de la paroi de séparation (53) qui est en avant du trou (80) s'étend vers le haut tout en s'étendant vers l'avant, une partie de la paroi de séparation (53) qui est en arrière du trou (80) s'étend vers le haut tout en s'étendant vers l'arrière, et une partie de la paroi de séparation (53) qui s'étend depuis l'avant du trou (80) vers l'arrière du trou (80) a une forme incurvée enfoncée vers le bas.

11. Véhicule à enfourcher (1) selon l'une quelconque des revendications 1 à 10, **caractérisé en ce que** la paroi de séparation (53) est formée en une forme telle qu'une position du trou (80) est une position la plus basse de la paroi de séparation (53), lorsque le véhicule est observé de côté, selon qu'un angle (θ) est un premier angle ou un second angle, dans lequel l'angle (θ) est un angle formé entre une ligne droite (L1) qui s'étend entre un centre (43c) du troisième arbre de rotation (43) et un centre (42c) du deuxième arbre de rotation (42) et une ligne horizontale (LH) qui passe par le centre (43c) du troisième arbre de rotation (43).

12. Véhicule à enfourcher (1) selon l'une quelconque des revendications 1 à 11, **caractérisé en ce qu'**une hauteur du centre (43c) du troisième arbre de rotation (43) est égale à une hauteur du centre (42c) du deuxième arbre de rotation (42) ou le centre (43c) du troisième arbre de rotation (43) est plus bas que le centre (42c) du deuxième arbre de rotation (42).

13. Véhicule à enfourcher (1) selon l'une quelconque des revendications 1 à 12, **caractérisé en ce que** le carter (50) est formé avec un autre trou (81) qui est situé en avant du trou (80) et qui relie entre l'intérieur et l'extérieur de la chambre de reniflard (55) ;
le véhicule à enfourcher (1) comprend un carter de filtre à air (18) dont au moins une partie est disposée au-dessus du carter (50), lorsque le véhicule est observé de côté ; le véhicule à enfourcher (1) comprend un passage de gaz (17) qui comprend une extrémité d'entrée (17a) connectée à l'autre trou (81) du carter (50) et une extrémité de sortie (17b) connectée au carter de filtre à air (18) ; et
lorsque le véhicule est observé de côté, une partie de l'extrémité d'entrée (17a) est située en arrière d'une extrémité avant (17bfe) de l'extrémité de sortie (17b) et en avant d'une extrémité arrière (17bre) de l'extrémité de sortie (17b).
